# EUROPEAN PATENT APPLICATION

(11) **EP 4 838 803 A1**
(43) Date of publication of application: **11.11.2026**
(21) Application number: 25175404.0
(22) Date of filing: 09.05.2025
(51) Int. Cl.: H04B 7/06, H04W 36/00

(54) **CANDIDATE CELL CHANNEL STATE INFORMATION REFERENCE SIGNAL (CSI-RSI) MEASUREMENT REPORTING**

(71) Applicant: Nokia Technologies Oy, 02610 Espoo (FI)
(72) Inventor: KAINULAINEN, Jani-Pekka, Cottenham - CB (GB); DIMNIK, Riikka Karoliina, Kirkkonummi (FI); KOSKELA, Timo, Oulu (FI); GOYAL, Sanjay, Denville - NJ (US); DALSGAARD, Lars, Oulu (FI)
(74) Representative: Nokia EPO representatives

(57) **Abstract**

A method is provided that includes performing one or more channel state information reference signal (CSI-RS) beam management measurements on a CSI-RS of a serving cell. The method includes making a determination that at least one condition is fulfilled for the one or more CSI-RS beam management measurements. Based on the determination, the method includes skipping one or more CSI-RS candidate cell measurements on a CSI-RS of a candidate cell for a cell change procedure. And the method includes sending, toward a network, a CSI-RS beam management measurement report including the one or more CSI-RS beam management measurements as the one or more CSI-RS candidate cell measurements.

## Description

### TECHNOLOGICAL FIELD

The present disclosure relates generally to telecommunications and, in particular, to candidate cell channel state information reference signal (CSI-RS) measurement reporting in a telecommunications system.

### BACKGROUND

Telecommunications systems can be seen as facilities that enable communications between two or more entities such as between two user equipment, between a user equipment and a base station, between two base stations, a user equipment and a network function of a communication network and/or a base station and other nodes. A telecommunications system can include a communication network and one or more user equipment. Communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a telecommunications system that includes a wireless communication network, at least a part of a communication session between at least two stations occurs over a wireless link. Examples of wireless communication networks comprise public land mobile networks (PLMN), satellite-based communication networks and different wireless local networks, for example wireless local area networks (WLAN). Some wireless communication networks can be divided into cells, and are therefore often referred to as cellular networks.

A user can access a communication network of the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by, for example, a base station of a cell, and transmit and/or receive communications on the carrier.

Telecommunications systems have evolved through multiple generations, each bringing advancements in speed, capacity, and functionality. The Evolved Packet System (EPS) represents the 4G architecture, which includes Long-Term Evolution (LTE) and LTE-Advanced (LTE-A) as its radio access technologies. The 5G System (5GS) builds upon EPS, introducing 5G New Radio (5G NR) for enhanced mobile broadband, massive machine-type communications, and ultra-reliable low-latency communications. The future 6G System (6GS) is expected to further revolutionize telecommunications with even more advanced capabilities. Telecommunications systems are interconnected, with 5GS designed to interwork with EPS for seamless service continuity. The 3rd Generation Partnership Project (3GPP) plays a crucial role in developing and maintaining standards for these telecommunications systems, ensuring global interoperability and evolution from Universal Mobile Telecommunications System (UMTS) (3G) through to the ongoing development of 6G technologies.

### BRIEF SUMMARY

Example implementations of the present disclosure are directed to telecommunications and, in particular, to candidate cell channel state information reference signal (CSI-RS) measurement reporting in a telecommunications system. According to some aspects, the present disclosure includes the subject matter of the independent claims. Some further aspects are defined in the dependent claims.

The above-referenced and other aspects, features, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. The present disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates a PLMN, according to some example implementations;
FIG. 3 is a diagram of a procedure for L1/L2-triggered mobility, also known as lower-layer triggered mobility (LTM);
FIG. 4 is a diagram of a procedure for LTM including candidate cell channel state information reference signal (CSI-RS) measurement reporting, according to some example implementations;
FIG. 5, 6 and 7 are flowcharts illustrating various steps in methods according to various example implementations; and
FIG. 8 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout. Unless specified otherwise or clear from context, references to first, second or the like should not be construed to imply a particular order but are merely utilized to distinguish one item or operation from another.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

The present disclosure discusses telecommunication systems and mobile or cellular networks and user equipment thereof, and while specific terms may be used, are broadly applicable across various technologies. For instance, while the present disclosure may reference radio access technologies such as 5G NR and 5G Advanced, the present disclosure is equally relevant to next generation radio access technologies, such as 6G. Example implementations of the present disclosure described herein also mention public land mobile networks (PLMNs) and mobile network operators (MNOs), but example implementations are similarly applicable to standalone non-public networks (SNPNs).

Although some examples and figures focus on radio access networks (RANs) and in particular radio access networks that operate in accordance with the 3GPP standard for 5G NR (generally referred to as 3GPP access or 3GPP access networks), example implementations are applicable to any type of access networks. The applicability to any type of access network includes not only 3GPP access networks but also non-3GPP access networks, such as wireline access, untrusted non-3GPP access network, and trusted non-3GPP access network using wireless access gateway function (W-AGF), non-3GPP interworking function (N3IWF), or trusted non-3GPP gateway function (TNGF) to connect to a core network (e.g., a 5G core network (5GC) or a 6G core network (6GC)) of a mobile or cellular network.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

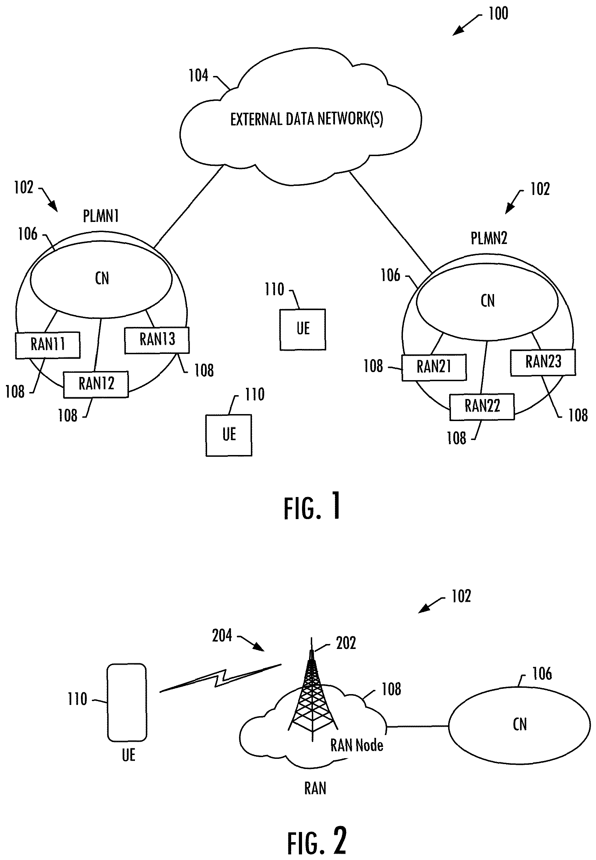

FIG. 1 illustrates a telecommunications system **100** according to various example implementations of the present disclosure. Examples of suitable telecommunications systems include UMTS, EPS and 5GS, as well as the future 6GS. The telecommunications system (otherwise referred to as a system) generally includes one or more mobile or cellular networks. The one or more mobile or cellular networks may interwork with each other. As shown, for example, the system includes one or more PLMNs **102** coupled to one or more other external data networks (DN) **104** - notably including a wide area network (WAN) such as the Internet. As will be appreciated, a PLMN may be a standalone PLMN that includes a 5GC, or may be a non-standalone PLMN that includes both an Evolved Packet Core (EPC) and a 5GC connected to a RAN. Although the system shown includes one or more PLMNs, it will be appreciated that the system may include one or more non-public networks, or one or more PLMNs and one or more non-public networks.

Each of the PLMNs **102** includes a core network (CN) **106,** such as the EPC, the 5GC, or a 6GC; and each CN is coupled to one or more RANs **108** that implement one or more radio access technologies (RATs). Examples of these RANs include the evolved UMTS terrestrial radio access network (E-UTRAN) of 4G LTE, the next generation (NG) radio access network (NG-RAN) of 5G NR, and the 6G RAN. As used herein, a "network device" refers to any suitable device of a RAN or a core network of a telecommunications system. Examples of suitable network devices are described in greater detail below.

Examples of RATs include 3GPP radio access technologies such as GSM, CDMA2000 1xEV-DO (HRPD), CDMA2000 1x (1xRTT), UTRA, E-UTRA, 5G NR, 5G Advanced, and 6G. Other examples of RATs include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a RAT may refer to any 2G, 3G, 4G, 5G, 6G or higher generation RAT and their different versions, as well as to any other RAT that may be arranged to interwork with such a RAT to provide access to the CN **106** of a MNO.

The telecommunications system **100** also includes one or more communication devices that may be varyingly known as user equipment (UE) **110,** terminal device, terminal equipment, mobile station or the like. The UE is generally a device configured to communicate with a network device (e.g., an access node such as a RAN node of RAN **108)** or a further UE in the telecommunications system. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial loT (lloT device), a vehicle equipped with a vehicle-to-everything (V2X) communication technology, or the like. In some examples, as referenced by 3GPP, the UE may be a narrowband loT (NB-loT) device, an enhanced machine-type communication (eMTC) device, a reduced capability (RedCap) device, an ambient loT device, or the like.

In operation, these UEs **110** may connect to one or more RAN nodes of the RANs **108** according to their particular RATs to thereby access a particular CN **106** of a PLMN **102,** or to access one or more of the external data networks **104** (e.g., the Internet) or services provided by the PLMN. The external data network may provide Internet access, or 3rd party services (e.g., service provided by 3rd party applications servers). For example, the International Telecommunication Union (ITU) has classified 5G mobile network services (e.g., services provided by a 5G mobile network) into three categories: enhanced mobile broadband (eMBB), ultra-reliable and low-latency communications (URLLC), and massive machine type communications (mMTC) or massive internet of things (MloT).

In various examples, a RAN **108** may be configured to provide one or more macrocells, microcells, picocells, femtocells or the like. The RAN may generally include one or more RAN nodes that interact with UEs **110.** In various examples, a RAN node may be referred to as a base station (BS), access point (AP), base transceiver station (BTS). Examples of RAN nodes include a Node B (NB), evolved NB (eNB), macro BS, NB (MNB) or eNB (MeNB), home BS, NB (HNB) or eNB (HeNB), next generation NB (gNB), enhanced gNB (en-gNB), next generation eNB (ng-eNB), 6G NB (6gNB), or the like. The term 'gNB' in 5G NR may correspond to the eNB in 4G LTE. Also, a NG-RAN node may refer to a gNB or a ng-eNB. And unless otherwise specified, a gNB in 5G NR or a 6gNB in 6G may at times be more generally referred to as a (6)gNB or more simply a gNB.

The RAN **108** may include some type of network controlling/governing entity responsible for control of the RAN nodes. The network controlling/governing entity and RAN node may be separate entities or may be integrated into a single apparatus. The network controlling/governing entity may include processing circuity configured to carry out various management functions for controlling a RAN node or RAN nodes of the RAN. The processing circuity may be associated with a memory, computer-readable storage medium or a data storage device comprising a database for maintaining information required in the various management functions.

FIG. 2 illustrates an example of a PLMN **102,** such as 4G LTE, 5G NR or 6G PLMN that communicates with a UE **110** and an external data network **104** of the telecommunications system **100.** As shown, the RAN **108** (e.g., E-UTRAN, NG-RAN, 6G RAN) includes one or more RAN nodes **202** configured to connect one or more UEs to the RAN to thereby access the CN **106** (e.g., EPC, 5GC, 6GC). In 4G LTE, the UE, E-UTRAN and EPC compose the EPS. Similarly, in 5G NR, the UE, NG-RAN and 5GC compose the 5GS. And in 6G, the UE, 6G RAN and 6GC compose the 6GS.

A RAN node **202** may provide one or more cells **204** that serve a UE **110.** A UE will generally have a primary cell, known as a PCell, which is typically the cell through which the UE first connects to the RAN **108.** The RAN (typically via the PCell) may provide the UE additional configuration information to enable it to simultaneously connect to additional cells on carriers other than the PCell, which are known as the UE's secondary cells or SCells. The PCell RAN node **202** may be referred to as a master node, and the SCell RAN node may be referred to as a secondary node. Relatedly, a master cell group (MCG) refers to a group of serving cells associated with the master node, and the MCG includes PCell. A secondary cell group (SCG) refers to a group of serving cells associated with the secondary node, and the SCG includes a primary cell referred to as the primary secondary cell (PSCell). A special cell (SpCell) refers to the PCell of the MCG or the PSCell of the SCG.

In some implementations, operations of a gNB or other RAN node **202** may be distributed or functionally split into components including one or more remote radio head (RRHs) or radio units (RUs), and a baseband unit (BBU); and in some implementations, the BBU may be split into a central/centralized unit (CU) (central node) and a distributed unit (DU) (distributed node). The CU may be, for example, a server, host or node. In some implementations, the RRH/RU and DU may be collocated at a network device. It is also possible that operations of a gNB or RAN node may be distributed among a plurality of servers, hosts or nodes.

Currently in 3GPP, mainstream mobility has been conducted using Layer 3 based mobility (L3 mobility) or higher layer mobility. In this regard, L3 handover based mobility is a well-known and proven method for ensuring a robust way of handing over the UE **110** from one serving cell **204** (source cell) of a RAN node **202** to a new serving cell (target cell) of the same or another RAN node. The method has been used at least since GSM and is still in use in 5G NR. It is expected that L3 mobility (legacy handover) will also be commonly used in the future, including in 6G.

L1/L2-triggered mobility, or lower-layer triggered mobility (LTM) moves the execution of the 'handover' from one cell **204** to another from higher layers (L3), such as radio resource control (RRC), to lower layers. This procedure may also be called a cell switch or cell change procedure. These lower layers may be either the physical (PHY) (layer 1 or L1) or medium access control (MAC) (layer 2 or L2) or lower layer of 6G control plane. LTM or cell change procedure may reduce latency, overhead and interruption time when compared to L3 handover based mobility. In a CU-DU split architecture, LTM may support one or more of intra-DU mobility, intra-CU inter-DU mobility, or inter-CU inter-DU mobility.

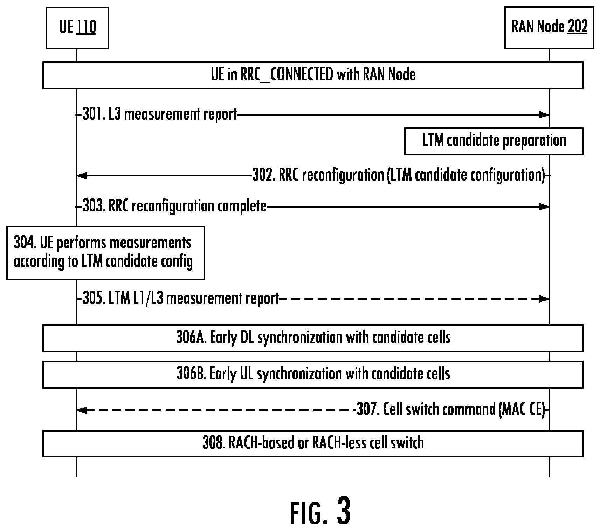

FIG. 3 illustrates a diagram of a procedure for LTM procedure of a UE **110** in a RRC connected state with a RAN node **202.** During LTM preparation or reconfiguration phase, as shown at step **301,** the UE sends a L3 measurement report to the RAN node, which decides to use LTM and initiate LTM candidate preparation. The RAN node at step **302** sends a RRC reconfiguration message to the UE, including candidate configurations of one or more LTM candidate cells (at times more generally referred to as candidate cells). In the context of LTM, an LTM candidate cell is a cell configured by the RAN node for potential a cell switch, and that may be later selected by the RAN node (among one or more LTM candidate cells) for the cell switch. The RRC reconfiguration message may also include a configuration of L1 or L3 measurement reporting for LTM execution. The UE stores the candidate configurations, and the UE at step **303** sends a RRC reconfiguration complete message to the RAN node.

The UE **110** at step **304** performs L1 or L3 measurements on the configured LTM candidate cell(s), and the UE at step **305** sends L1/L3 measurement reports to the RAN node **202.**

In LTM, an optional early synchronization of the UE **110** with the LTM candidate cell(s) may be performed. As shown at steps **306A** and **306B,** the UE **110** performs downlink (DL) and may perform uplink (UL) synchronization with the LTM candidate cell(s). For DL synchronization at step **306A,** the RAN node **202** may perform an early activation of configured transmission configuration indicator (TCI) states for the LTM candidate cell(s), such as via a MAC control element (MAC CE) or other control message. The UE may receive this TCI state activation MAC CE, and start tracking configured DL reference signal (RS) resources associated with the activate TCI states to synchronize with the LTM candidate cell(s). In this regard, an active TCI state is a configured TCI state that has been activated for use by the UE to determine information, typically quasi co-location (QCL) information, for DL reception or UL transmission. The tracking of RS may refer to performing one or more measurements on the RS. With each measurement, one or more parameters such as, RS received power (RSRP), delay spread, Doppler spread, average delay, Doppler shift, spatial domain filter coefficient may be acquired or updated. The measurement may be performed with one or more consecutive/periodic occurrences of the RS.

During early UL synchronization at step **306B,** the UE **110** may acquire a timing advance (TA) of respective one or more of the LTM candidate cell(s). In this regard, the RAN node **202** may request that the UE to perform early TA acquisition for example via contention free random access (CFRA) triggered by a physical downlink control channel (PDCCH) order (using downlink control information (DCI) format 1_0) or other TA acquisition command, following which the UE sends a random access channel (RACH) preamble on the physical random access channel (PRACH) towards an indicated LTM candidate cell. In 3GPP, the random access (RA) or RACH preamble is sent as a first message (msg1) as part of a RA or RACH procedure; and accordingly, the RA or RACH preamble may at times be referred to as msg1. In order to minimize the data interruption of the RAN node due to CFRA towards the LTM candidate cell(s), the UE may not receive a random access response (RAR) from the network (from the LTM candidate cell) for the purpose of TA value acquisition, and the TA value to be used when accessing the LTM candidate cell may be indicated in a subsequent cell switch command.

This early synchronization may reduce interruption during LTM execution, as compared to L3 handover based mobility. In this regard, the TA may be used to control the timing of uplink transmissions of a UE **110** toward the LTM candidate cell(s). The UE may likewise have an acquired TA of the cell of the RAN node **202** to control the timing of uplink transmissions toward the RAN node.

The RAN node **202** may at some point decide to execute a cell switch (more generally a handover) based on the L1/L3 measurement reports (from step **305),** and select one of the LTM candidate cell(s) as a target cell for the cell switch. L1/L3 measurement reports may also be used by the RAN node to select LTM candidate cells and corresponding TCI states for early DL synchronization or/and to select LTM candidate cells and CFRA configuration, like synchronization signal block (SSB) identifier (ID) to trigger RACH procedure by a PDCCH order.

The RAN node **202** at step **307** transmits an LTM cell switch command (at times more generally referred to as a cell switch command), such as a MAC CE, to trigger the cell switch. The LTM cell switch command may indicate a target configuration identifier (ID) which indicates the index of the candidate configuration of the target cell. The LTM cell switch command may also indicate a beam indicated with a TCI state, or beams indicated with DL and UL TCI states, and TA value for the target cell, if available. The UE at step **308** switches to the candidate configuration of the target cell, and performs the cell switch to the target cell. If the TA of the target cell (from step **306)** is no longer available (or otherwise not acquired), the UE performs the cell switch as RACH-based cell switch in which the UE initiates a RACH procedure with the target cell to acquire the TA of the target cell. If the TA of the target cell is available, the UE performs the cell switch as a RACH-less cell switch. The UE may then indicate successful completion of the cell switch.

In 3GPP Release-18 LTM, information about measurement resources (SSBs) from the LTM candidate cells are provided to the UE **110** so that UE can perform measurements. The UE may also be configured with L1/L3 measurement reporting configuration where the UE can report the measurements. As introduced, LTM offers improvements in handover latency and interruption time compared to L3 mobility. But LTM as introduced also has a number of limitations relative to L3 mobility. A number of enhancements of LTM are currently under discussion for 3GPP Release 19 to address these limitations. One of the objectives is to enable channel state information RS (CSI-RS) L1-RSRP measurements for LTM procedures and enable CSI-RS beam based management.

For serving cell procedures such as intra cell beam management or inter cell beam management (BM) but without any change in the serving cell or channel state information acquisition, for L1 measurements, there are three types of time-variant RS resources, namely, periodic, semi-persistent (SP), and aperiodic (AP). SSB is always periodic, while CSI-RS can be periodic, semi-persistent or aperiodic. Similarly, reporting of CSI-RS measurements is also supported in the above three time-variants. Periodic CSI-RS may be reported by periodic reporting, semi-persistent report and aperiodic-report. SP CSI-RS may be reported by semi-persistent report and aperiodic report, while AP CSI-RS may only be reported by aperiodic report. Among them, periodic CSI-RS may be configured and activated by RRC, while SP CSI-RS may be configured by RRC but activated/deactivated by a control command such as a MAC CE. AP CSI-RS may be configured by RRC, but activated by a DCI.

In Release 18, measurements of SSBs from LTM candidate cells may be performed and then reported to the serving cell, which may use the measurements to decide the target call for a cell switch (and for other operations such as to trigger early DL and UL synchronization before the cell switch). Similarly, in Release 19, L1-RSRP measurements of CSI-RS from LTM candidate cells may be performed by the UE **110,** reported to the source cell and used by the source cell to decide the target cell for a cell switch from LTM candidate cells (and for other operations such as to trigger early DL and UL synchronization). The difference between these two types of reference signals is that SSB is a broadcast always-on signal which is sent with a wide spatial settings / beam, while CSI-RS is a signal is periodical (always on), aperiodic or semi-persistent and sent traditionally with a narrower beam, larger bandwidth, and shorter periodicity compared to SSB. CSI-RSs are can be configured to be UE-specific within a cell or they can be shared across UEs. In general, this difference results in a more dynamic nature of CSI-RS from the LTM candidate cells which is not in control of the serving cell and with wider bandwidth it may provide better estimation of the radio conditions. Due to these design differences SSB is usually used for neighboring cell synchronization while the CSI-RS is used for beam management. In Release 19 LTM introduces the CSI-RS for neighboring or candidate cell measurements.

Ongoing discussions within 3GPP involve the measurement procedure for CSI-RS based LTM candidate cell measurements, and whether L1 SSB measurements are needed with SSB-based beam sweeping, at least for frequency range 2 (FR2). For CSI-RS L1 measurements on candidate cells, the following steps have been discussed.

Step 1: The UE **110** performs SSB based L3 measurement and acquires the SSB index information. It may here be assumed that the RAN node **220** transmits SSBs using a wide beam, and the UE uses a wide receive (Rx) beam to monitor for these SSBs.

Step 2: For FR2-1, the UE **110** performs SSB based L1-RSRP measurement with beam sweeping (i.e., receive/Rx beam sweeping) on the LTM candidate cell to refine the SSB based RX beam. In an option 1, the UE may perform SSB based beam sweeping; and in CSI-RS requirements, beam sweeping is omitted. In an option 2, the UE does not perform SSB based beam sweeping; and in CSI-RS requirements, beam sweeping is enabled.

Step 3: The UE **110** performs measurements on configured CSI-RS resources of the LTM candidate cell where each CSI-RS resource is Type D QCL-ed with SSB for L1-RSRP measurement in step 2. In step 3, it may be assumed that the RAN node **202** transmits CSI-RS using a narrow beam, and the UE uses a fine receive beam to monitor these SSBs. Also, in an option 1, the UE does not perform CSI-RS beam sweeping (beam sweeping is omitted) because of step 2 option 1. In an option 2, the UE performs CSI-RS measurement directly based on L3 SSB measurements, and performs beam sweeping on CSI-RS.

For step 2 and step 3 option 1, the UE **110** uses Release 18 SSB beam sweeping, and the CSI-RS beam sweeping may be omitted from the requirements. For step 2 and step 3 option 2, on the other hand, the UE may need to support CSI-RS based beam sweeping for CSI-RS that is measured after L3 SSB based measurements. The CSI-RS based beam sweeping is an additional time, and the beam sweeping factor may be scaled based on number of CSI-RS beams.

Using SSB L1 measurements for beam sweeping is more legacy implementation friendly while the CSI-RS beam sweeping is a new mechanism introduced in Release 19 for candidate cell measurements. For UEs **110** that support the CSI-RS beam sweeping capability, step 2 may be skipped. If step 2 is skipped, the CSI-RS resources in step 3 may be Type-D QCL'ed with the SSB in step 1. These CSI-RS resources at least in Release 19 may be periodic or SP, and the CSI-RS resources may be in a CSI-RS resource set with repetition set to off. A UE receive beam sweeping factor may also be included in the CSI-RS based L1-RSRP measurement period. The beam sweeping factor provides UE more time to perform CSI-RS based beam sweeping.

For UEs **110** that do not support the CSI-RS beam sweeping capability, for at least FR2-1, the UEs may perform step 2 (L1 SSB based beam sweeping). Step 2 may therefore be necessary for a UE that does not support the CSI-RS beam sweeping capability. The CSI-RS resources in step 3 may be at least Type-D QCL'ed with the SSB in step 2. The UE receive beam sweeping factor may not be included in the CSI-RS based L1-RSRP measurement period, assuming the CSI-RS resources are in the CSI-RS resource set with repetition set to off or left unconfigured by the network.

As indicated above, it has been agreed within 3GPP to support CSI-RS based beam sweeping. This means that the UE **110** may skip the SSB-based L1 measurements for FR2, but the CSI-RS based beam sweeping is still included. While the final details of CSI-RS based beam sweeping have not yet been fully agreed, the CSI-RS based beam sweeping may be scaled per number of CSI-RS beams, which means that the time it takes to perform the process can be quite or very long. The longer the CSI-RS measurement delay, the longer it takes for UE to complete the CSI-RS L1-RSRP measurements, and the more the handover decision is delayed at the RAN node **202,** or in some cases, the RAN node may trigger the cell switch before receiving the CSI-RS measurement report, leading to no benefit from CSI-RS measurements before cell switch.

In view of the foregoing, example implementations of the present disclosure provide solution(s) to optimize the CSI-RS L1-RSRP measurement delay for LTM candidate cells. The UE **110** may perform one or more CSI-RS beam management measurements on a CSI-RS of a serving cell (e.g., periodic or active SP CSI-RS), which may be configured by a CSI-RS beam management configuration for CSI-RS beam management measurements on the serving cell, which may be received by the UE. Similarly, the UE may perform one or more CSI-RS candidate cell measurements on CSI-RS of one or more LTM candidate cells, which may be configured by an LTM CSI-RS configuration for CSI-RS candidate cell measurements on the LTM candidate cell(s).

According to the solution(s) of some example implementations, the UE **110** may utilize CSI-RS beam management measurements to reduce or omit the number of CSI-RS candidate cell measurements that UE is configured to perform, when at least one condition is fulfilled for the CSI-RS beam management measurements on a CSI-RS of a serving cell. In this case, the serving cell may be one of the LTM candidate cell(s) (or, conversely, an LTM candidate cell is one of the UE's serving cells). This may be the case when the UE is configured (e.g., by a L1/L3 measurement reporting configuration) to report measurements associated with the serving cell in an LTM CSI-RS measurement report, which may be indicated when the LTM CSI-RS measurement report is configured with SpCelllnclusion.

The condition(s) may include or indicate one or more RS, configuration and/or time-based associations between the CSI-RS beam management measurements and the CSI-RS candidate cell measurements. The UE **110** may make a determination that the condition(s) is fulfilled for one or more CSI-RS beam management measurements. Based on the determination, the UE may skip one or more CSI-RS candidate cell measurements on a CSI-RS of a LTM candidate cell, and report the CSI-RS beam management measurement(s) as the CSI-RS candidate cell measurement(s). In some examples, the UE may send, toward the RAN **108** (RAN node **202),** an LTM CSI-RS measurement report including the CSI-RS beam management measurement(s) as the CSI-RS candidate cell measurement(s). In some other examples, the UE may send a CSI-RS beam management measurement report including the CSI-RS beam management measurement(s) as the CSI-RS candidate cell measurement(s).

Again, in some examples, the condition(s) may include or indicate RS, configuration and/or time-based association(s) between the CSI-RS beam management measurements and the CSI-RS candidate cell measurements. Examples of suitable conditions that include or indicate RS-based associations include:
the CSI-RS of the serving cell and the CSI-RS of the LTM candidate cell are quasi co-located (QCL-ed) to a common RS (e.g., SSB or another CSI-RS;
at least a certain number (e.g., 24, 48, 64, 128) of physical resource blocks (PRBs) of the CSI-RS of the LTM candidate cell are within an active downlink bandwidth part (BWP) (or other frequency configuration that allows the UE to perform measurements within that frequency configuration without negative impact to serving cell data traffic);
at least a certain number (e.g., 48) of the PRBs of the CSI-RS of the LTM candidate cell overlap with the CSI-RS of the serving cell;
the CSI-RS of the serving cell is fully contained within the active downlink BWP;
the CSI-RS of the serving cell and the CSI-RS of the LTM candidate cell occur within a certain time duration (e.g., x milliseconds (ms), x slots) of each other;
a center frequency of the CSI-RS of the serving cell is the same as a center frequency of the CSI-RS of the LTM candidate cell;
the CSI-RS of the serving cell and the CSI-RS of the LTM candidate cell are the same in length, subcarrier spacing and center frequency, which may indicate the RS is the same; or
the CSI-RS of the serving cell and the CSI-RS of the LTM candidate cell have a common configuration in at least resource mapping, periodicity and offset.
In one example, the CSI-RS of the serving cell may be configured with a repetition pattern set to 'ON', or the CSI-RS of the serving cell may be QCL-ed with a CSI-RS configured with the repetition pattern set to 'ON', which may indicate the UE **110** has performed receive beam sweeping with the CSI-RS.

One example of a suitable condition that includes or indicates a configuration-based (e.g., RRC signaling-based) association includes the LTM candidate cell(s) configured for the CSI-RS candidate cell measurements includes the serving cell, as indicated above. Another suitable example includes the CSI-RS beam management measurements and CSI-RS candidate cell measurements are configured by respective configurations, and at least one of the respective configurations indicates one or more CSI-RS resources are the same between the respective configurations, and/or at least a certain number (e.g., 48) of PRBs of the CSI-RS of the serving cell are within an active downlink BWP. In yet another example, at least one of the respective configurations indicates or includes one or more CSI-RS resources are the same between the respective configurations, at least a certain number (e.g., e48) of PRBs of the CSI-RS of the serving cell are within an active downlink BWP, and/or a reporting configuration that is set to be the same (e.g., by reporting configuratio identifier) for the CSI-RS of the serving cell and the CSI-RS of the LTM candidate cell.

Other examples of suitable condition(s) include those that include or indicate time-based association(s) between the CSI-RS beam management measurements and the CSI-RS candidate cell measurements. These condition(s) may at times be referred to as time-based condition(s). Examples of suitable time-based conditions include the CSI-RS beam management measurement(s) were reported for beam management no longer than a certain time duration (e.g., x ms) before the determination is made, or the CSI-RS beam management measurement(s) were performed no longer than a certain duration (e.g., x ms) before a reporting occasion for CSI-RS candidate cell measurements, or receipt of an LTM cell switch command.

The UE **110** may report the CSI-RS beam management measurement(s) as the CSI-RS candidate cell measurement(s) in a number of different manners. In some examples, the UE may send an LTM CSI-RS measurement report that includes the CSI-RS beam management measurement(s). In some of these examples, the LTM CSI-RS measurement report may also include an indication, such as a flag, that CSI-RS measurements in the LTM CSI-RS measurement report include CSI-RS beam management measurements. In some other examples, the UE may send a CSI-RS beam management measurement report that includes the CSI-RS beam management measurement(s). In some of these other examples, the RAN node **202** may be tasked with making the association between the CSI-RS beam management measurement(s) and CSI-RS candidate cell measurement(s), with the UE not being required to report CSI-RS candidate cell measurement(s) for the LTM candidate cell.

In some examples, the CSI-RS beam management measurement(s) may be reported in a measurement reporting container that contains the CSI-RS beam management measurement(s). In partiuclar, for example, the LTM CSI-RS measurement report may include a measurement reporting container that contains the CSI-RS beam management measurement(s). In another example, the CSI-RS beam management measurement report may include a measurement reporting container that contains the the CSI-RS beam management measurement(s).The measurement reporting container may be structured in a number of different manners, such as by an L1 reporting container, a MAC CE-based reporting container, or an abstract syntax notation one (ASN.1)-based reporting container. The reporting container may also be in-band control element, similar in nature as MAC CE but transmitted by another protocol entity. It may also be possible that the report is transmitted in ASN.1 notation by a L2 protocol entity. A more particular example of an L1 reporting container is uplink control information (UCI). And in the case of a MAC CE-based reporting container, it should be understood that the reporting container may be based on a similar protocol layer-based reporting container referred to by another name, such as another data link layer.

In some examples, a number of conditions may be combined into a validity condition. In this regard, CSI-RS beam management measurement(s) may be considered valid to report as CSI-RS candidate cell measurement(s) when:
CSI-RS beam management measurements and CSI-RS candidate cell measurements are configured by respective configurations;
the CSI-RS of the serving cell and the CSI-RS of the LTM candidate cell are QCL-ed to a common reference signal;
at least a certain number (e.g., 48) of PRBs of the CSI-RS of the LTM candidate cell are within an active downlink BWP; and
the CSI-RS beam management measurement(s) were reported for beam management no longer than a certain time duration (e.g., x ms) before the determination is made that the conditions are fulfilled for the CSI-RS beam management measurement(s).
In these examples, when the CSI-RS beam management measurement(s) are considered valid for CSI-RS candidate cell measurement(s), the UE **110** may not be required to perform (or may otherwise skip) the CSI-RS candidate cell measurement(s). The UE may then report the CSI-RS beam management measurement(s) as the CSI-RS candidate cell measurement(s).

The solution(s) of some example implementations may also impact the number of measurments a UE **110** is to perform. In this regard, the number of the CSI-RS candidate cell measurement(s) on the CSI-RS of the LTM candidate cell may be indicated by a scaling factor or a multiplier (e.g. positive integer) that depends on a number of the LTM candidate cell(s) to measure CSI-RS. Consider P_{CSI-Sharing} to indicate the number of LTM candidate cell(s) or CSI-RS resources to measure CSI-RS. In some examples, P_{CSI-Sharing} may indicate the number of the LTM candidate cell(s) excluding any of the LTM candidate cell(s) that are serving cells. In some other examples, P_{CSI-Sharing} may indicate the number of the LTM candidate cell(s) any of the LTM candidate cell(s) that are serving cells with CSI-RS beam management measurements that are reportable as CSI-RS candidate cell measurements (e.g., valid CSI-RS beam management measurements).

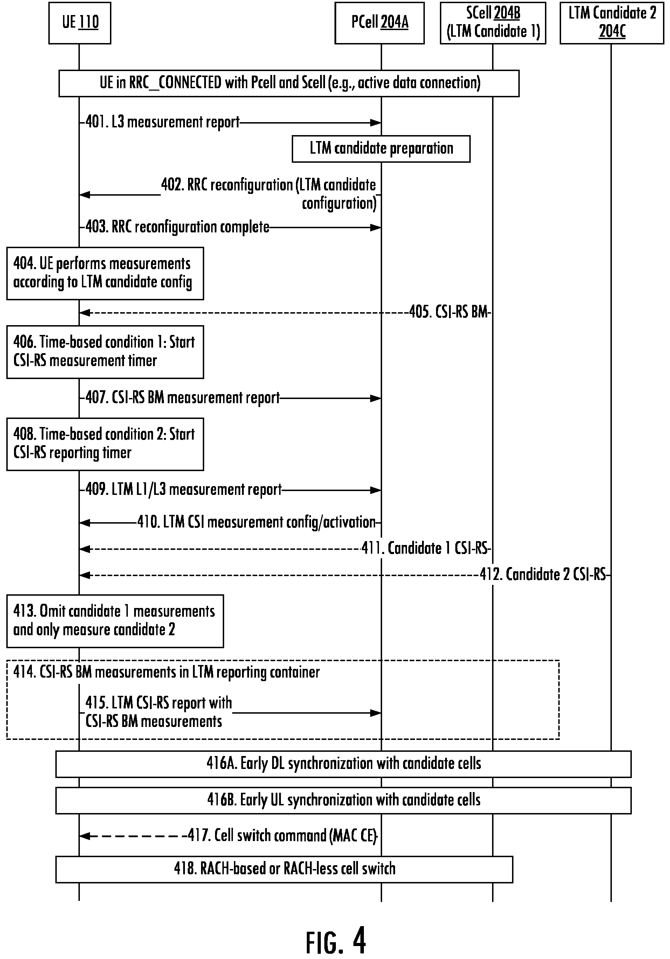

To further illustrate some example implementations, FIG. 4 is a diagram of a procedure for LTM including candidate cell CSI-RS measurement reporting. In the illustrated procedure, a UE **110** is in a RRC connected state with a PCell **204A** and a SCell **204B,** which may be provided by the same or different RAN nodes **202.** During LTM preparation, as shown at step **401,** the UE may send a L3 measurement report to the PCell, which decides to use LTM and initiate LTM candidate preparation. The PCell may at step **402** send a RRC reconfiguration message to the UE, including candidate configurations of one or more LTM candidate cells (at times more generally referred to as candidate cells). The LTM candidate cells include the SCell as a first LTM candidate cell, and a second LTM candidate **cell 204C** (provided by the same or another RAN node **202** than either or both the PCell and SCell). The RRC reconfiguration message may also include a configuration of L1 measurement reporting for LTM execution. The UE may store the candidate configurations, and the UE may at step **403** send a RRC reconfiguration complete message to the PCell.

The UE **110** may at step **404** performs L1 or L3 measurements on the configured LTM candidate cells, including the first LTM candidate cell (SCell **204B)** and the second LTM candidate cell **204C.** For example, the UE may perform SSB-based measurements on the LTM candidate cells; and if CSI-RS measurements have been configured, the UE may also at step **404** perform CSI-RS measurements on the LTM candidate cells.

The SCell **204B** may at step **405** transmit CSI-RS for beam management, such as based on a legacy configuration. The UE **110** may in turn perform CSI-RS beam management measurement(s) on the CSI-RS of the SCell. In some examples, as shown, the UE may at step **406** start a timer from the last CSI-RS beam management measurement that is the same or that fulfills at least one of the conditions indicated above. In one case, the CSI-RS may be the same physical RS for beam management and LTM candidate cell, such as when the length in PRBs is the same, center frequency is the same; and in this case, the confirmation may also be the same (at least from the part that describes physical properties of the RS). In another case, there may be a CSI-RS beam management measurement that meets at least one of the conditions indicated above (e.g., at least a number of PRBs of the CSI-RS of the LTM candidate cell are within an active BWP or overlap with the CSI-RS of the serving cell), in which case the CSI-RS beam management measurement may not be the same but close enough to serve as a CSI-RS candidate cell measurement. The UE may then at step **407** transmit, toward the PCell **204A,** a CSI-RS beam management measurement report that includes the CSI-RS beam management measurement(s) on the CSI-RS of the SCell. In some examples, the UE may at step **408** start a timer from the last CSI-RS beam management measurement report that is the same or that fulfills at least one of the conditions indicated above.

The UE **110** may at step **407** send, toward the PCell **204A,** an L1/L3 measurement report including measurements of the LTM candidate cells.

The PCell **204** may at step **410** configure or activate an LTM CSI-RS configuration, such as based on the L1/L3 measurement report. The first LTM candidate cell (SCell **204B)** and the second LTM candidate **cell 204C** may at steps **411, 412** transmit respective CSI-RS based on the LTM CSI-RS configuration. The UE may perform CSI-RS candidate cell measurements on the respective CSI-RS.

The UE **110** may make the determination that at least one condition is fulfilled for the CSI-RS beam management measurement(s) on the CSI-RS of the first LTM candidate cell, as the CSI-RS is the same as the CSI-RS transmitted by the SCell **204B** for beam management. In this regard, the UE may determine that the CSI-RS beam management measurement(s) performed on the CSI-RS of the SCell at step **407** may be reused as CSI-RS candidate cell measurement(s). Based on the determination, the UE may at step **414** decide to skip CSI-RS candidate cell measurement(s) on the first LTM candidate cell (SCell), and the report the CSI-RS beam management measurement(s) in an LTM reporting container. The UE may then at step **415** send, toward the PCell **204,** an LTM CSI-RS measurement report including the CSI-RS beam management measurement(s) of the SCell as the CSI-RS candidate cell measurement(s) of the first LTM candidate cell.

In a manner the same as or similar to that described above, at steps **416A, 416B,** an optional early synchronization of the UE **110** with the LTM candidate cells may be performed. That is, the UE may perform DL and UL synchronization with the LTM candidate cells including the first LTM candidate cell (SCell **204B)** and the second LTM candidate cell **204C.** For DL synchronization at step, the PCell **204A** may perform an early activation of configured TCI states for the LTM candidate cells, such as via a MAC CE or other control message. And during early UL synchronization at step **306B,** the UE may acquire a TA of respective one or more of the LTM candidate cells.

The PCell **204A** may at some point decide to execute a cell switch based on the L1/L3 measurement reports (from step **305)** and/or the LTM CSI-RS measurement report (from step **415).** The PCell may select one of the LTM candidate cells, such as the first LTM candidate cell (SCell **204B)** as a target cell for the cell switch. The PCell may at step **417** transmit an LTM cell switch command, such as a MAC CE, to trigger the cell switch. The UE may at step **418** switch to the candidate configuration of the target cell, and perform the cell switch to the target cell. If the TA of the target cell (from step **416)** is no longer available (or otherwise not acquired), the UE performs the cell switch as RACH-based cell switch in which the UE initiates a RACH procedure with the target cell to acquire the TA of the target cell. If the TA of the target cell is available, the UE performs the cell switch as a RACH-less cell switch. The UE may then indicate successful completion of the cell switch.

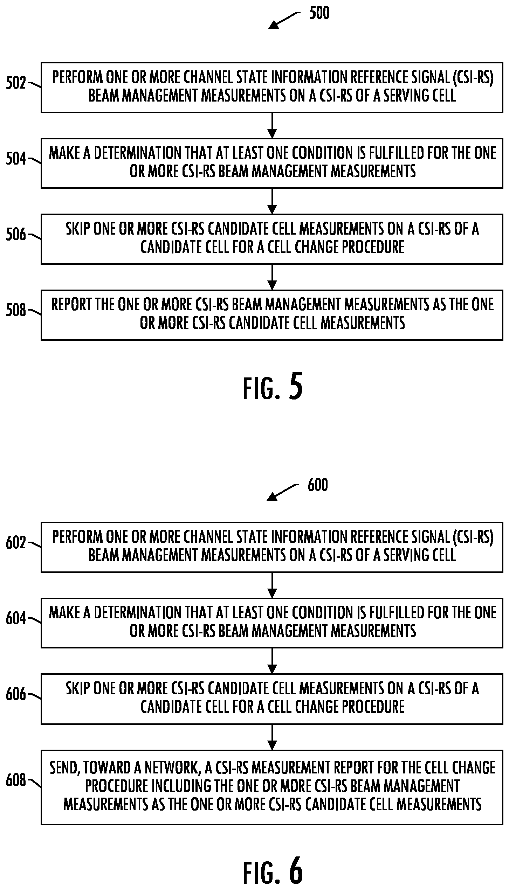

FIG. 5 is a flowchart illustrating various steps in a method **500** according to various example implementations. The method includes performing one or more channel state information reference signal (CSI-RS) beam management measurements on a CSI-RS of a serving cell, as shown at block **502.** The method includes making a determination that at least one condition is fulfilled for the one or more CSI-RS beam management measurements, as shown at block **504.** Based on the determination, the method includes skipping one or more CSI-RS candidate cell measurements on a CSI-RS of a candidate cell for a cell change procedure, as shown at block **506.** And the method includes reporting the one or more CSI-RS beam management measurements as the one or more CSI-RS candidate cell measurements, as shown at block **508.**

In some examples, the method **500** further includes receiving a CSI-RS beam management configuration for CSI-RS beam management measurements on the serving cell, and a CSI-RS configuration for CSI-RS candidate cell measurements on one or more candidate cells. In some of these examples, the one or more CSI-RS beam management measurements are performed at block 502 based on the CSI-RS beam management configuration, and the one or more CSI-RS candidate cell measurements skipped at block **506** are configured by the CSI-RS configuration.

In some examples, the at least one condition includes at least one of: the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); at least a certain number of the PRBs of the CSI-RS of the candidate cell overlap with the CSI-RS of the serving cell; the CSI-RS of the serving cell is fully contained within the active downlink BWP; the CSI-RS of the serving cell and the CSI-RS of the candidate cell occur within a certain time duration of each other; a center frequency of the CSI-RS of the serving cell is the same as a center frequency of the CSI-RS of the candidate cell; the CSI-RS of the serving cell and the CSI-RS of the candidate cell are the same in length, subcarrier spacing and center frequency; or the CSI-RS of the serving cell and the CSI-RS of the candidate cell have a common configuration in at least resource mapping, periodicity and offset.

In some examples, the one or more CSI-RS candidate cell measurements skipped at block **506** are configured by a CSI-RS configuration for CSI-RS candidate cell measurements on one or more candidate cells. In some of these examples, the at least one condition includes the one or more candidate cells includes the serving cell.

In some examples, the at least one condition includes CSI-RS beam management measurements and CSI-RS candidate cell measurements are configured by respective configurations. In some of these examples, at least one of the respective configurations indicates at least one of: one or more CSI-RS resources are the same between the respective configurations; or at least a certain number of physical resource blocks (PRBs) of the CSI-RS of the serving cell are within an active downlink bandwidth part (BWP).

In some examples, the at least one condition includes CSI-RS beam management measurements and CSI-RS candidate cell measurements are configured by respective configurations. In some of these examples, at least one of the respective configurations indicates or includes at least one of: one or more CSI-RS resources are the same between the respective configurations. The method includes at least a certain number of physical resource blocks (PRBs) of the CSI-RS of the serving cell are within an active downlink bandwidth part (BWP); or a reporting configuration that is set to be the same for the CSI-RS of the serving cell and the CSI-RS of the candidate cell.

In some examples, the at least one condition further includes a time-based condition. In some of these examples, the time-based condition includes: the one or more CSI-RS beam management measurements were reported for beam management no longer than a certain time duration before the determination is made; or the one or more CSI-RS beam management measurements were performed no longer than a certain duration before a reporting occasion for CSI-RS candidate cell measurements, or receipt of a cell switch command.

In some examples, the at least one condition includes: CSI-RS beam management measurements and CSI-RS candidate cell measurements are configured by respective configurations; the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); and the one or more CSI-RS beam management measurements were reported for beam management no longer than a certain time duration before the determination is made.

In some examples, the one or more CSI-RS candidate cell measurements skipped at block **506** are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells.

In some examples, the one or more CSI-RS candidate cell measurements skipped at block **506** are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells with CSI-RS beam management measurements that are reportable as CSI-RS candidate cell measurements.

FIG. 6 is a flowchart illustrating various steps in a method **600** according to various example implementations. The method includes performing one or more channel state information reference signal (CSI-RS) beam management measurements on a CSI-RS of a serving cell, as shown at block **602.** The method includes making a determination that at least one condition is fulfilled for the one or more CSI-RS beam management measurements, as shown at block **604.** Based on the determination, the method includes skipping one or more CSI-RS candidate cell measurements on a CSI-RS of a candidate cell for a cell change procedure, as shown at block **606.** And the method includes sending, toward a network, a CSI-RS measurement report for the cell change procedure including the one or more CSI-RS beam management measurements as the one or more CSI-RS candidate cell measurements, as shown at block **608.**

In some examples, the method **600** further includes receiving a CSI-RS beam management configuration for CSI-RS beam management measurements on the serving cell, and a CSI-RS configuration for CSI-RS candidate cell measurements on one or more candidate cells. In some of these examples, the one or more CSI-RS beam management measurements are performed at block **602** based on the CSI-RS beam management configuration, and the one or more CSI-RS candidate cell measurements skipped at block **606** are configured by the CSI-RS configuration.

In some examples, the at least one condition includes at least one of: the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); at least a certain number of the PRBs of the CSI-RS of the candidate cell overlap with the CSI-RS of the serving cell; the CSI-RS of the serving cell is fully contained within the active downlink BWP; the CSI-RS of the serving cell and the CSI-RS of the candidate cell occur within a certain time duration of each other; a center frequency of the CSI-RS of the serving cell is the same as a center frequency of the CSI-RS of the candidate cell; the CSI-RS of the serving cell and the CSI-RS of the candidate cell are the same in length, subcarrier spacing and center frequency; or the CSI-RS of the serving cell and the CSI-RS of the candidate cell have a common configuration in at least resource mapping, periodicity and offset.

In some examples, the one or more CSI-RS candidate cell measurements skipped at block 606 are configured by a CSI-RS configuration for CSI-RS candidate cell measurements on one or more candidate cells. In some of these examples, the at least one condition includes the one or more candidate cells includes the serving cell.

In some examples, the at least one condition includes CSI-RS beam management measurements and CSI-RS candidate cell measurements are configured by respective configurations. In some of these examples, at least one of the respective configurations indicates at least one of: one or more CSI-RS resources are the same between the respective configurations; or at least a certain number of physical resource blocks (PRBs) of the CSI-RS of the serving cell are within an active downlink bandwidth part (BWP).

In some examples, the at least one condition includes CSI-RS beam management measurements and CSI-RS candidate cell measurements are configured by respective configurations. In some of these examples, at least one of the respective configurations indicates or includes at least one of: one or more CSI-RS resources are the same between the respective configurations. The method includes at least a certain number of physical resource blocks (PRBs) of the CSI-RS of the serving cell are within an active downlink bandwidth part (BWP); or a reporting configuration that is set to be the same for the CSI-RS of the serving cell and the CSI-RS of the candidate cell.

In some examples, the at least one condition further includes a time-based condition, and the time-based condition includes: the one or more CSI-RS beam management measurements were reported for beam management no longer than a certain time duration before the determination is made; or the one or more CSI-RS beam management measurements were performed no longer than a certain duration before a reporting occasion for CSI-RS candidate cell measurements, or receipt of a cell switch command.

In some examples, the at least one condition includes: CSI-RS beam management measurements and CSI-RS candidate cell measurements are configured by respective configurations; the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); and the one or more CSI-RS beam management measurements were reported for beam management no longer than a certain time duration before the determination is made.

In some examples, the one or more CSI-RS candidate cell measurements skipped at block 606 are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells.

In some examples, the one or more CSI-RS candidate cell measurements skipped at block **606** are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells with CSI-RS beam management measurements that are reportable as CSI-RS candidate cell measurements.

In some examples, the CSI-RS measurement report for the cell change procedure further includes an indication that CSI-RS measurements in the CSI-RS measurement report include CSI-RS beam management measurements.

In some examples, the CSI-RS measurement report for the cell change procedure includes a measurement reporting container that contains the one or more CSI-RS beam management measurements. In some of these examples, the measurement reporting container is: a layer 1 (L1) reporting container; a medium access control (MAC) control element (CE)-based reporting container; or an abstract syntax notation one (ASN.1)-based reporting container.

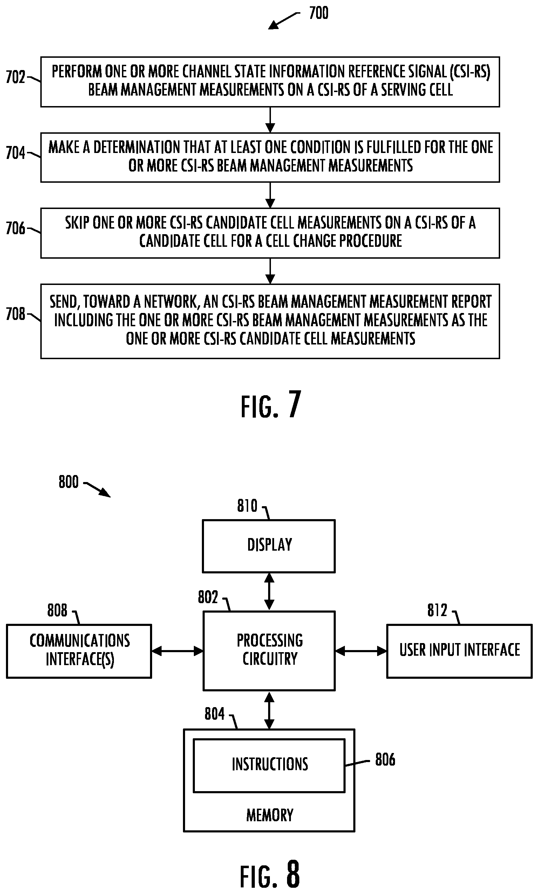

FIG. 7 is a flowchart illustrating various steps in a method **700** according to various example implementations. The method includes performing one or more channel state information reference signal (CSI-RS) beam management measurements on a CSI-RS of a serving cell, as shown at block **702.** The method includes making a determination that at least one condition is fulfilled for the one or more CSI-RS beam management measurements, as shown at block **704.** Based on the determination, the method includes skipping one or more CSI-RS candidate cell measurements on a CSI-RS of a for a cell change procedure candidate cell, as shown at block **706.** And the method includes sending, toward a network, a CSI-RS beam management measurement report including the one or more CSI-RS beam management measurements as the one or more CSI-RS candidate cell measurements, as shown at block **708.**

In some examples, the method **700** further includes receiving a CSI-RS beam management configuration for CSI-RS beam management measurements on the serving cell, and a CSI-RS configuration for CSI-RS candidate cell measurements on one or more candidate cells. In some of these examples, the one or more CSI-RS beam management measurements are performed at block **702** based on the CSI-RS beam management configuration, and the one or more CSI-RS candidate cell measurements skipped at block **706** are configured by the CSI-RS configuration.

In some examples, the at least one condition includes at least one of: the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); at least a certain number of the PRBs of the CSI-RS of the candidate cell overlap with the CSI-RS of the serving cell; the CSI-RS of the serving cell is fully contained within the active downlink BWP; the CSI-RS of the serving cell and the CSI-RS of the candidate cell occur within a certain time duration of each other; a center frequency of the CSI-RS of the serving cell is the same as a center frequency of the CSI-RS of the candidate cell; the CSI-RS of the serving cell and the CSI-RS of the candidate cell are the same in length, subcarrier spacing and center frequency; or the CSI-RS of the serving cell and the CSI-RS of the candidate cell have a common configuration in at least resource mapping, periodicity and offset.

In some examples, the one or more CSI-RS candidate cell measurements skipped at block **706** are configured by a CSI-RS configuration for CSI-RS candidate cell measurements on one or more candidate cells. In some of these examples, the at least one condition includes the one or more candidate cells includes the serving cell.

In some examples, the at least one condition includes CSI-RS beam management measurements and CSI-RS candidate cell measurements are configured by respective configurations. In some of these examples, at least one of the respective configurations indicates at least one of: one or more CSI-RS resources are the same between the respective configurations; or at least a certain number of physical resource blocks (PRBs) of the CSI-RS of the serving cell are within an active downlink bandwidth part (BWP).

In some examples, the at least one condition includes CSI-RS beam management measurements and CSI-RS candidate cell measurements are configured by respective configurations. In some of these examples, at least one of the respective configurations indicates or includes at least one of: one or more CSI-RS resources are the same between the respective configurations. The method includes at least a certain number of physical resource blocks (PRBs) of the CSI-RS of the serving cell are within an active downlink bandwidth part (BWP); or a reporting configuration that is set to be the same for the CSI-RS of the serving cell and the CSI-RS of the candidate cell.

In some examples, the at least one condition further includes a time-based condition, and the time-based condition includes: the one or more CSI-RS beam management measurements were reported for beam management no longer than a certain time duration before the determination is made; or the one or more CSI-RS beam management measurements were performed no longer than a certain duration before a reporting occasion for CSI-RS candidate cell measurements, or receipt of a cell switch command.

In some examples, the at least one condition includes: CSI-RS beam management measurements and CSI-RS candidate cell measurements are configured by respective configurations; the CSI-RS of the serving cell and the CSI-RS of the candidate cell are quasi co-located (QCL-ed) to a common reference signal; at least a certain number of physical resource blocks (PRBs) of the CSI-RS of the candidate cell are within an active downlink bandwidth part (BWP); and the one or more CSI-RS beam management measurements were reported for beam management no longer than a certain time duration before the determination is made.

In some examples, the one or more CSI-RS candidate cell measurements skipped at block **706** are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells.

In some examples, the one or more CSI-RS candidate cell measurements skipped at block **706** are configured by a CSI-RS configuration for CSI-RS candidate cell measurements on one or more candidate cells. In some of these examples, a number of the one or more CSI-RS candidate cell measurements on the CSI-RS of the candidate cell is indicated by a scaling factor that depends on a number of the one or more candidate cells excluding any of the one or more candidate cells that are serving cells with CSI-RS beam management measurements that are reportable as CSI-RS candidate cell measurements.

In some examples, the CSI-RS beam management measurement report includes a measurement reporting container that contains the one or more CSI-RS beam management measurements. In some of these examples, the measurement reporting container is: a layer 1 (L1) reporting container; a medium access control (MAC) control element (CE)-based reporting container; or an abstract syntax notation one (ASN.1)-based reporting container.

According to example implementations of the present disclosure, a telecommunications system **100** or PLMN **102,** and components thereof such as UE **110,** CN **106,** RAN **108** and/ RAN node **202,** may be implemented by various means. Means for implementing the system and its components may include hardware, firmware, software, or combinations thereof. In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

According to some example implementations, at least some of the method **500** described with respect to FIG. 5 may be carried out by an apparatus comprising means for performing functions corresponding steps of the method. Similarly, at least some of the method **600** described with respect to FIG. 6 may be carried out by an apparatus comprising means for performing functions corresponding steps of the method. And at least some of the method **700** described with respect to FIG. 7 may be carried out by an apparatus comprising means for performing functions corresponding steps of the method. Examples of a suitable apparatus may include a user equipment, user device, user terminal or the like.

FIG. 8 illustrates an apparatus **800** in which means for performing various operations includes hardware, alone or under direction of one or more computer programs from a computer-readable storage medium or other memory, such as computer memory, according to some example implementations of the present disclosure. The apparatus may include one or more of each of a number of components such as, for example, processing circuitry **802** connected to computer-readable storage medium or other memory **804.**

The processing circuitry **802** may be composed of one or more processors alone or in combination with one or more computer-readable storage media. The processing circuitry is generally any piece of computer hardware that is capable of processing information such as, for example, data, computer programs, computer code and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **804** (of the same or another apparatus).

The processing circuitry **802** may comprise a number of processors, a multi-core processor or some other type of processor, such as a central processing unit, a graphics processing unit, a tensor processing, unit, or an accelerator, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more application specific integrated circuits (ASICs), field programmable gate arrays (FPGAs) or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory **804** is generally any piece of computer hardware that is capable of storing information such as, for example, data, computer programs, instructions 806 (e.g., computer-readable program code) and/or other suitable information either on a temporary basis and/or a permanent basis. The memory may include volatile and/or non-volatile memory, and may be fixed or removable. Examples of suitable memory include recording media, random access memory (RAM), read-only memory (ROM), a hard drive, a flash memory, a thumb drive, a removable computer diskette, an optical disk or some combination thereof.

The memory **804** is a non-transitory device capable of storing information. One example of a suitable memory is a computer-readable storage medium, which is distinguishable from a computer-readable transmission medium capable of carrying information from one location to another. Examples of suitable computer-readable transmission media comprise electronic carrier signals, telecommunications signals, or some combination thereof. As used herein, the term "non-transitory" is a limitation of the medium itself (i.e., tangible, not a signal) as opposed to a limitation on data storage persistency (e.g., RAM versus ROM). A computer-readable medium as described herein generally refers to a computer-readable storage medium or computer-readable transmission medium. A computer-readable medium is any entity or device capable in which information, such as one or more computer programs or portions thereof, may be stored and carried.

In addition to the memory **804** (e.g., computer-readable storage medium), the processing circuitry **802** may also be connected to one or more interfaces for displaying, transmitting and/or receiving information. The interfaces may include a communications interface **808** and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **810** and/or one or more user input interfaces **812.** The display may be configured to present or otherwise display information to a user, suitable examples of which include a liquid crystal display (LCD), light-emitting diode (LED) display, organic LED (OLED) display, active-matrix OLED (AMOLED) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

Execution of the instructions **806** by the processing circuitry **802,** or storage of the instructions in the memory **804,** supports combinations of operations for implementing example implementations of the present disclosure. In this manner, an apparatus **800** may comprise at least one processing circuitry and at least one memory coupled to the at least one processing circuitry, where the at least one processing circuitry is configured to execute instructions stored in the at least one memory. It will also be understood that one or more functions, and combinations of functions, may be implemented by special purpose hardware-based computer systems and/or processing circuitry which perform the specified functions, or combinations of special purpose hardware and program code instructions.

Some example implementations of the present disclosure may also be carried out in the form of a computer process defined by one or more computer programs or portions thereof. Example implementations of the present disclosure may be carried out by executing at least one portion of a computer program comprising instructions. The computer program may be in source code form, object code form, or in some intermediate form. The computer program may be stored in a computer-readable medium that is readable by a computer, processing circuitry or other suitable apparatus. As indicated above, for example, the computer program may be stored in a memory, such as a computer-readable storage medium. Additionally or alternatively, for example, the computer program may be stored in a computer-readable transmission medium. The coding of software for carrying out example implementations of the present disclosure is well within the scope of a person of ordinary skill in the art.

As will be appreciated, any suitable instructions may be loaded onto a computer, a processor, a processing circuitry or other programmable apparatus from a memory or a computer-readable medium (e.g., computer-readable storage medium, computer-readable transmission medium) to produce a particular machine, such that the particular machine becomes a means for implementing the functions specified herein. The instructions may also be stored in a computer-readable medium that can direct a computer, a processor, a processing circuitry or other programmable apparatus to function in a particular manner to thereby generate a particular machine or particular article of manufacture. In some examples, the instructions stored in the computer-readable medium may produce an article of manufacture, where the article of manufacture becomes a means for implementing functions described herein. The instructions may be retrieved from a computer-readable medium and loaded into a computer, processor, processing circuitry or other programmable apparatus to configure the computer, processor, processing circuitry or other programmable apparatus to execute operations to be performed on or by the computer, processor, processing circuitry or other programmable apparatus.

Retrieval, loading and execution of instructions comprising program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor, processing circuitry or other programmable apparatus provide operations for implementing functions described herein.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
at least one memory configured to store instructions; and
at least one processing circuitry configured to access the at least one memory, and execute the instructions to cause the apparatus to at least:
perform one or more channel state information reference signal (CSI-RS) beam management measurements on a CSI-RS of a serving cell;
make a determination that at least one condition is fulfilled for the one or more CSI-RS beam management measurements; and based on the determination,
skip one or more CSI-RS candidate cell measurements on a CSI-RS of a candidate cell for a cell change procedure; and
send, toward a network, a CSI-RS beam management measurement report including the one or more CSI-RS beam management measurements as the one or more CSI-RS candidate cell measurements.

2. The apparatus of claim 1, wherein the at least one processing circuitry is configured to execute the instructions to cause the apparatus to further receive a CSI-RS beam management configuration for CSI-RS beam management measurements on the serving cell, and a CSI-RS configuration for CSI-RS candidate cell measurements on one or more candidate cells, and
wherein the one or more CSI-RS beam management measurements are performed based on the CSI-RS beam management configuration, and the one or more CSI-RS candidate cell measurements skipped are configured by the CSI-RS configuration.

3. The apparatus of claim 1 or claim 2, wherein the at least one condition includes at least one of:
the CSI-RS of the serving cell and the CSI-RS of the candidate cell are quasi co-located (QCL-ed) to a common reference signal;
at least a certain number of physical resource blocks (PRBs) of the CSI-RS of the candidate cell are within an active downlink bandwidth part (BWP);
at least a certain number of the PRBs of the CSI-RS of the candidate cell overlap with the CSI-RS of the serving cell;
the CSI-RS of the serving cell is fully contained within the active downlink BWP;
the CSI-RS of the serving cell and the CSI-RS of the candidate cell occur within a certain time duration of each other;
a center frequency of the CSI-RS of the serving cell is the same as a center frequency of the CSI-RS of the candidate cell;
the CSI-RS of the serving cell and the CSI-RS of the candidate cell are the same in length, subcarrier spacing and center frequency; or
the CSI-RS of the serving cell and the CSI-RS of the candidate cell have a common configuration in at least resource mapping, periodicity and offset.

4. The apparatus of any of claims 1 to 3, wherein the one or more CSI-RS candidate cell measurements skipped are configured by a CSI-RS configuration for CSI-RS candidate cell measurements on one or more candidate cells, and
wherein the at least one condition includes the one or more candidate cells includes the serving cell.

5. The apparatus of any of claims 1 to 4, wherein the at least one condition includes CSI-RS beam management measurements and CSI-RS candidate cell measurements are configured by respective configurations, and at least one of the respective configurations indicates at least one of:
one or more CSI-RS resources are the same between the respective configurations; or
at least a certain number of physical resource blocks (PRBs) of the CSI-RS of the serving cell are within an active downlink bandwidth part (BWP).

6. The apparatus of any of claims 1 to 5, wherein the at least one condition includes CSI-RS beam management measurements and CSI-RS candidate cell measurements are configured by respective configurations, and at least one of the respective configurations indicates or includes at least one of:
one or more CSI-RS resources are the same between the respective configurations;
at least a certain number of physical resource blocks (PRBs) of the CSI-RS of the serving cell are within an active downlink bandwidth part (BWP); or
a reporting configuration that is set to be the same for the CSI-RS of the serving cell and the CSI-RS of the candidate cell.

7. The apparatus of any of claims 1 to 6, wherein the at least one condition further includes a time-based condition, and the time-based condition includes:
the one or more CSI-RS beam management measurements were reported for beam management no longer than a certain time duration before the determination is made; or
the one or more CSI-RS beam management measurements were performed no longer than a certain duration before a reporting occasion for CSI-RS candidate cell measurements, or receipt of a cell switch command.

8. The apparatus of any of claims 1 to 7, wherein the at least one condition includes:
CSI-RS beam management measurements and CSI-RS candidate cell measurements are configured by respective configurations;
the CSI-RS of the serving cell and the CSI-RS of the candidate cell are quasi co-located (QCL-ed) to a common reference signal;
at least a certain number of physical resource blocks (PRBs) of the CSI-RS of the candidate cell are within an active downlink bandwidth part (BWP); and
the one or more CSI-RS beam management measurements were reported for beam management no longer than a certain time duration before the determination is made.

9. The apparatus of any of claims 1 to 8, wherein the one or more CSI-RS candidate cell measurements skipped are configured by a CSI-RS configuration for CSI-RS candidate cell measurements on one or more candidate cells, and
wherein a number of the one or more CSI-RS candidate cell measurements on the CSI-RS of the candidate cell is indicated by a scaling factor that depends on a number of the one or more candidate cells excluding any of the one or more candidate cells that are serving cells.

10. The apparatus of any of claims 1 to 9, wherein the one or more CSI-RS candidate cell measurements skipped are configured by a CSI-RS configuration for CSI-RS candidate cell measurements on one or more candidate cells, and
wherein a number of the one or more CSI-RS candidate cell measurements on the CSI-RS of the candidate cell is indicated by a scaling factor that depends on a number of the one or more candidate cells excluding any of the one or more candidate cells that are serving cells with CSI-RS beam management measurements that are reportable as CSI-RS candidate cell measurements.

11. The apparatus of any of claims 1 to 10, wherein the CSI-RS beam management measurement report includes a measurement reporting container that contains the one or more CSI-RS beam management measurements, and the measurement reporting container is:
a layer 1 (L1) reporting container;
a medium access control (MAC) control element (CE)-based reporting container; or
an abstract syntax notation one (ASN.1)-based reporting container.

12. An apparatus comprising:
performing one or more channel state information reference signal (CSI-RS) beam management measurements on a CSI-RS of a serving cell;
making a determination that at least one condition is fulfilled for the one or more CSI-RS beam management measurements; and based on the determination,
skipping one or more CSI-RS candidate cell measurements on a CSI-RS of a candidate cell for a cell change procedure; and
sending, toward a network, a CSI-RS beam management measurement report including the one or more CSI-RS beam management measurements as the one or more CSI-RS candidate cell measurements.

13. A method comprising:
performing one or more channel state information reference signal (CSI-RS) beam management measurements on a CSI-RS of a serving cell;
making a determination that at least one condition is fulfilled for the one or more CSI-RS beam management measurements; and based on the determination,
skipping one or more CSI-RS candidate cell measurements on a CSI-RS of a candidate cell for a cell change procedure; and
sending, toward a network, a CSI-RS beam management measurement report including the one or more CSI-RS beam management measurements as the one or more CSI-RS candidate cell measurements.

14. A computer-readable medium comprising instructions that, in response to execution by at least one processing circuitry, causes an apparatus to at least:
perform one or more channel state information reference signal (CSI-RS) beam management measurements on a CSI-RS of a serving cell;
make a determination that at least one condition is fulfilled for the one or more CSI-RS beam management measurements; and based on the determination,
skip one or more CSI-RS candidate cell measurements on a CSI-RS of a candidate cell for a cell change procedure; and
send, toward a network, a CSI-RS beam management measurement report including the one or more CSI-RS beam management measurements as the one or more CSI-RS candidate cell measurements.

15. A computer program comprising instructions that, in response to execution by at least one processing circuitry, causes an apparatus to at least:
perform one or more channel state information reference signal (CSI-RS) beam management measurements on a CSI-RS of a serving cell;
make a determination that at least one condition is fulfilled for the one or more CSI-RS beam management measurements; and based on the determination,
skip one or more CSI-RS candidate cell measurements on a CSI-RS of a candidate cell for a cell change procedure; and
send, toward a network, a CSI-RS beam management measurement report including the one or more CSI-RS beam management measurements as the one or more CSI-RS candidate cell measurements.
